# EUROPÄISCHE PATENTSCHRIFT

(11) **EP 1 125 278 B1**
(45) Veröffentlichungstag und Bekanntmachung des Hinweises auf die Patenterteilung: **24.03.2004**
(21) Anmeldenummer: 99907239.0
(22) Anmeldetag: 14.01.1999
(51) Int. Cl.: G10L 15/22, H04M 1/27

(54) **DATENVERARBEITUNGSSYSTEM ODER KOMMUNIKATIONSENDGERÄT MIT EINER EINRICHTUNG ZUR ERKENNUNG GESPROCHENER SPRACHE UND VERFAHREN ZUR ERKENNUNG BESTIMMTER AKUSTISCHER OBJEKTE**
DATA PROCESSING SYSTEM OR COMMUNICATIONS TERMINAL WITH A DEVICE FOR RECOGNISING SPEECH AND METHOD FOR RECOGNISING CERTAIN ACOUSTIC OBJECTS
SYSTEME DE TRAITEMENT DE DONNEES OU TERMINAL DE COMMUNICATION DOTE D'UN DISPOSITIF DE RECONNAISSANCE VOCALE ET PROCEDE DE RECONNAISSANCE DE CERTAINS OBJETS ACOUSTIQUES

(30) Priorität: 06.11.1998 DE 19851287
(43) Veröffentlichungstag der Anmeldung: 22.08.2001
(73) Patentinhaber: SIEMENS AKTIENGESELLSCHAFT, 80333 München (DE)
(72) Erfinder: Müller, Friedrich, D-81475 München (DE)
(86) Internationale Anmeldenummer: PCT/DE1999/000068
(87) Internationale Veröffentlichungsnummer: WO 2000/028527

(56) Entgegenhaltungen:
- EP-A- 0 376 501
- EP-A- 0 746 129
- EP-A- 0 862 159
- US-A- 5 231 670

## Beschreibung

Datenverarbeitungssystem oder Kommunikationsendgerät mit einer Einrichtung zur Erkennung gesprochener Sprache und Verfahren zur Erkennung bestimmter akustischer Objekte

Einrichtungen und Verfahren zur Erkennung natürlicher gesprochener Sprache sind dem Fachmann heute aus einer Vielzahl unterschiedlicher Anwendungen geläufig. Die praktische Anwendbarkeit und Leistungsfähigkeit derartiger Systeme hängt dabei stark von ihrer Komplexität und der Breite ihres Anwendungsbereiches ab. Generell gilt dabei, daß die Erkennungsrate eines solchen Systems mit steigender Zahl der zu erkennenden akustischen Objekte (Worte, Phoneme, Einzelbuchstaben, etc.) gewöhnlich stark abnimmt. Gleichzeitig steigt der Aufwand gemessen nach Kosten und Platzbedarf aber auch im Hinblick auf den Trainingsaufwand meist stark mit der Anwendungsbreite an.

Für viele Anwendungen kommen herkömmliche Spracherkennungssysteme deshalb noch immer nicht zum Einsatz, obwohl sie aus Sicht des Anwenders grundsätzlich dafür geeignet wären. Der Erfindung liegt daher die Aufgabe zugrunde, eine technische Lehre anzugeben, die den Einsatz der Spracherkennung auch für solche Anwendungen ermöglicht, bei denen ein größerer Aufwand sich aus wirtschaftlichen oder anderen Gründen verbietet. Diese Aufgabe wird durch ein Datenverarbeitungssystem oder Kommunikationsendgerät mit einer Einrichtung zur Erkennung gesprochener Sprache oder durch ein Verfahren zur Erkennung bestimmter akustischer Objekte nach einem der Patentansprüche gelöst.

EP-A-0 746 129 offenbart eine Einrichtung seen Erkennung gesprochener Sprache mit mehreren Steuerbefehlen bei Falscherkennung eines akustischen Objekts.

Das erfindungsgemäße Erzeugnis, ein Datenverarbeitungssystem oder ein Kommunikationsendgerät, verfügt über eine Einrichtung zur Erkennung gesprochener Sprache gemäß Anspruchs 1. Die Erfindung besteht weiterhin aus einem verfahren gemäß Anspruchs 3.

Eine Einrichtung zur akustischen Ausgabe oder optischen Anzeige erkannter akustischer Objekte ist vorgesehen. Auf diese Weise kann die Zahl oder die Menge der zu erkennenden akustischen Objekte der beabsichtigten Anwendung weitgehend angepaßt werden. Die vorgesehene Einrichtung zur akustischen Ausgabe oder optischen Anzeige erkannter akustischer Objekte ermöglicht eine unmittelbare Rückkoppelung zwischen Benutzer und Vorrichtung, wodurch der Benutzer eine wirkungsvolle Kontrolle über die Erkennungsleistung erhält und die Zahl der Falscherkennungen auf einfache aber sehr wirkungsvolle Weise vermindert werden kann.

Stellt der Benutzer anhand der akustischen Ausgabe oder optischen Anzeige eine Falscherkennung fest, kann er die akustische Eingabe des zu erkennenden Objekts wiederholen. Da dieser Prozeß möglicherweise nicht in kürzester Zeit zur korrekten Erkennung führt, ist gemäß einer bevorzugten Ausführungsform der vorliegenden Erfindung vorgesehen, daß Einrichtung zur Spracherkennung so eingerichtet ist oder konfiguriert werden kann, daß die Erkennung eines bestimmten ersten Steuerbefehls im Anschluß an die Ausgabe oder Anzeige eines akustischen Objektes die Ausgabe oder Anzeige eines weiteren akustischen Objektes bewirkt. Der Benutzer hat demnach die Möglichkeit, die Vorrichtung im Anschluß an die Ausgabe oder Anzeige eines akustischen Objektes , also z. B. nach einer festgestellten Falscherkennung, durch akustische Eingabe eines besonderen akustischen Objekts, nämlich eines Steuerbefehls, zur Ausgabe eines weiteren akustischen Objektes zu veranlassen.

Ermittelt die Einrichtung zur Spracherkennung oder der Spracherkennungsalgorithmus beispielsweise für eine Auswahl {AO1, AO2, ..., AOn} von möglichen akustischen Objekten Erkennungswahrscheinlichkeiten {p1, p2, ..., pn} mit der Eigenschaft 1 > p1 >= p2 >= , ... , >= Pn > 0, so ermöglicht diese bevorzugte Ausführungsform z.B. die Ausgabe oder Anzeige von AO2 nach der Ausgabe des falscherkannten Objekts AO1, oder ähnliche Maßnahmen zur Unterstützung einer für den Benutzer möglichst komfortablen Korrektur des Erkennungsfehlers. Ein mögliche Wahl für ein solches besonderes akustisches Objekt oder einen solchen Steuerbefehl wäre z.B. das Wort "Falsch". Dem Fachmann fällt es nicht schwer, sich anhand der vorliegenden Darstellung weitere Anwendungsmöglichkeiten für diese Ausführungsform der vorliegenden Erfindung zu überlegen.

Weitere bevorzugte Ausführungsformen der vorliegenden Erfindung sind Gegenstand weiterer Unteransprüche.

Im folgenden wird die Erfindung anhand bevorzugter Ausführungsbeispiele und mit Hilfe von Figuren näher erläutert.

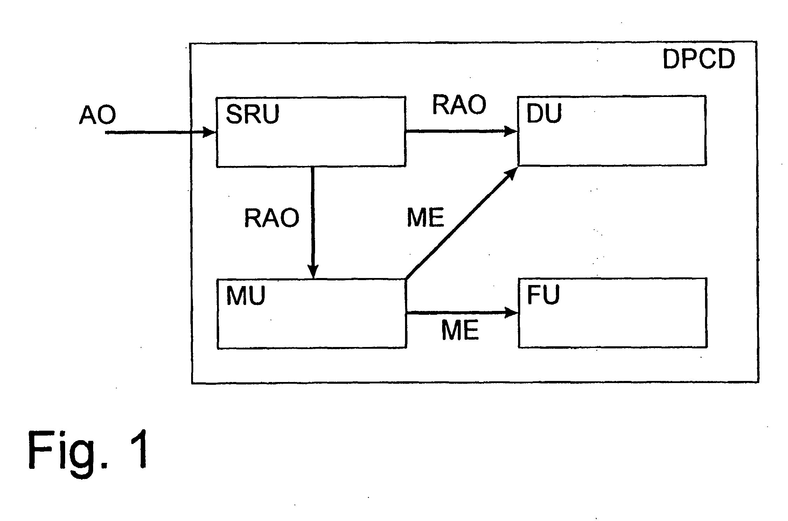

Figur 1 zeigt in schematischer Weise Aufbau und Funktionsweise einer bevorzugten Ausführungsform einer erfindungsgemäßen Vorrichtung.

Wie in Figur 1 dargestellt, umfaßt diese Ausführungsform eines erfindungsgemäßen Datenverarbeitungssystems (DPCD) oder Kommunikationsendgerätes (DPCD) eine Spracherkennungseinheit (SRU), die von einem Benutzer der Vorrichtung gesprochene akustische Objekte (AO) erkennt und die erkannten akustischen Objekte (RAO) einer Einrichtung zur akustischen Ausgabe oder optischen Anzeige (DU) zuführt. Gemäß der vorliegenden Erfindung ist die Spracherkennungseinrichtung speziell zur Erkennung bestimmter akustischer Objekte (AO), nämlich von Einzelbuchstaben, Buchstabenkombinationen oder Steuerbefehlen eingerichtet oder kann speziell zur Erkennung solcher Objekte konfiguriert werden.

Die Spracherkennungseinrichtung ordnet also jeweils einem vom Benutzer gesprochenen akustischen Objekt (AO) ein von dieser Einrichtung erkanntes akustisches Objekt (RAO) zu. Da die Erkennung natürlicher, gesprochener Sprache schon aus prinzipiellen Gründen immer mit einer gewissen Unsicherheit behaftet sei wird, wird je nach eingesetztem Spracherkennungsalgorithmus das erkannte akustische Objekt in der Regel das wahrscheinlichste oder plausibelste akustische Objekt sein, daß unter Berücksichtigung der ermittelten Merkmale des gesprochenen akustischen Objekts in Betracht kommt.

Der Benutzer erhält über die Ausgabe- bzw. Anzeigeeinrichtung (DU) eine Rückmeldung über das Ergebnis des Erkennungsprozesses. Er hat nun die Möglichkeit, darauf je nach der Art dieses Ergebnisses zu reagieren. Wurde das akustische Objekt falsch erkannt, hat er die Möglichkeit, durch Aussprechen eines dafür vorgesehenen Steuerbefehls, z.B. des Wortes "nochmal", dem Spracherkennungsalgorithmus mitzuteilen, daß das akustische Objekte nicht richtig erkannt wurde, oder daß er ein anderes Objekt erkannt haben wollte. Daraufhin hat er Gelegenheit, das von ihm gewünschte Objekt erneut auszusprechen. Dieser Prozeß kann solange fortgesetzt werden, bis die Spracherkennungseinheit das gewünschte Objekt erkennt.

Die Eingabe eines anderen Steuerbefehls, z.B. des Wortes "falsch", könnte den Spracherkennungsalgorithmus so steuern, daß ein weiteres akustisches Objekt ausgegeben wird, vorzugsweise dasjenige Objekt, dessen Wahrscheinlichkeit oder Plausibilität zwar geringer ist als die des zuvor ausgegebenen Objekts, aber größer als diejenige aller anderen In Frage kommenden Objekte. In diesem Fall wäre keine erneute Aussprache des Objekts durch den Benutzer nötig; es kämen statt dessen solange weitere Kandidaten für das zu erkennende Objekt, bis der Benutzer die Eingabe des entsprechenden Steuerbefehls unterläßt oder eventuell einen ausdrücklich bestätigenden Befehl, z.B. "richtig" eingibt.

Gemäß einer weiteren bevorzugten Ausführungsform könnte ein Steuerbefehl, z.B. das Wort "weiter", vorgesehen sein, dessen Erkennung im Anschluß an die Aussprache oder Anzeige eines akustischen Objektes die Anzeige oder Ausgabe eines diesem Objekt in einem bestimmten Sinne nachfolgenden Objektes bewirkt. Die Folge der Objekte muß dabei nicht über die Größe von Erkennungswahrscheinlichkeiten oder Plausibilitätswerten festgelegt sein, sondern kann auch durch die Abfolge von Einträgen in einer Speichereinrichtung (MU) der Vorrichtung, oder durch alphabetische oder innerhalb eines definierten Kontextes semantisch definierte Abfolgen von Objekten gegeben sein. Zum Beispiel könnte die Abfolge der Objekte durch die Ordnung innerhalb einer Datenbank, eines Telefonbuches oder durch die Struktur einer in der Speichereinrichtung gespeicherten Datei, z.B. einer Kundendatei, eines Wörterbuches, oder ähnlicher Dateien gegeben sein.

Wenn in dieser Patentanmeldung von Einrichtungen die Rede ist, die für eine bestimmte Funktion oder Betriebsweise eingerichtet sind oder konfiguriert werden können, dann ist damit gemeint, daß die entsprechenden Funktionsmerkmale dieser Einrichtungen dauerhaft oder zeitlich begrenzt sein können. Ferner können diese Einrichtungen von allen Beteiligten zwischen Hersteller und Anwender durch Herstellprozesse, Einstellungen an der Hardware oder durch Verwendung oder Parametrierung einer Software oder gleichwirkende Mittel oder Maßnahmen für eine bestimmte Funktion oder Betriebsweise eingerichtet oder konfiguriert werden. Dem Fachmann erschließen sich anhand dieser Beschreibung ohne weiteres zahlreiche ähnliche oder gleichwertige Mittel oder Maßnahmen für diesen Zweck.

Eine Spracherkennungseinrichtung wird vorzugsweise durch eine geeignete Auswahl oder Parametrierung der Software eingerichtet oder konfiguriert, die die gewünschte Funktion im Spracherkennungsalgorithmus und oder die Ablaufsteuerung dieser Einrichtung realisiert. Ein Datenspeicher wird vorzugsweise durch eine geeignete Auswahl oder Parametrierung der Datenstruktur, z.B. der Datenbankstruktur, eingerichtet oder konfiguriert, die die Art der Speicherung der Daten auf diesem Speicher und die Art des Zugriffs auf diese Daten definiert.

Die effektive Erkennungsleistung des Systems kann deutlich dadurch verbessert werden, daß die Erkennung eines akustischen Objekts oder einer Folge von Objekten das bzw. die einem Eintrag in dem Datenspeicher entspricht bzw. entsprechen, die Anzeige oder Ausgabe dieses Eintrages (ME) oder eine mit diesem Eintrag verbundene Funktion (FU) der Vorrichtung bewirkt. Hierdurch kann das vorhandene Vorwissen über die wahrscheinlich zu erkennenden Objekte sehr vorteilhaft ausgenutzt werden. Diese Technik ist dem Fachmann zwar grundsätzlich bekannt; wie entsprechende Versuche gezeigt haben, entfaltet sie jedoch in Verbindung mit einem Spracherkennunssystem, das auf die Erkennung eines begrenzten Vorrates an zu erkennenden Objekten, z.B. auf Einzelbuchstaben, spezialisiert ist, eine besondere Wirksamkeit.

Werden also z.B. die ersten drei Buchstaben eines Telefonbucheintrages erkannt, sieht eine bevorzugte Ausführungsform der Erfindung die Ausgabe oder Anzeige dieses Telefonbucheintrages vor. Ist es nicht der gewünschte Eintrag, genügt womöglich die Eingabe (d.h. die Aussprache) eines Steuerbefehls oder weniger weiterer Steuerbefehle wie z.B. "weiter" oder "Strasse" oder "Faxnummer" oder "verbinden", um z.B. ausgehend von dem einem Anwender bekannten Namen eines Gesprächspartners durch Aussprache der ersten drei Anfangssbuchstaben seines Namens zur Ausgabe seiner Faxnummer oder deren Anwahl durch das Kommunikationsendgerät zu gelangen. Andere Funktionen, die auf diese Weise ausgelöst werden könnten, wie z.B. die Ausgabe eines Textes oder Bildes, der Anzeige eines Datensatzes, etc. sind so zahlreich, daß ihre Aufzählung hier nicht möglich ist.

Die Leistungsfähigkeit der Vorrichtungen oder Verfahren, die die vorliegenden Erfindung realisieren, kann weiter dadurch gesteigert werden, daß bestimmte Steuerbefehle wie z.B. "Buchstabe", "Steuerung" oder "Kombination", etc., vorgesehen sind, durch deren Aussprache der Benutzer die Menge der zu erkennenden Objekte nach seiner Wahl (vorübergehend oder dauerhaft) auf eine bestimmte Untermenge wie z.B. Einzelbuchstaben, Buchstabenkombinationen oder Steuerbefehle einschränken kann.

Mit der vorliegenden Erfindung kann insbesondere die Anzahl der durch Sprachwahl abrufbaren Telefoneinträge in einem Mobiltelefon oder Schnurlostelefon oder in einem drahtgebundenen Telefon beliebig vergrößert werden. Bei herkömmlichen Systemen dieser Art wurde nur eine begrenzte Zahl von Einträgen für eine Sprachwahl zugelassen, erfahrungsgemäß maximal 20 oder 30 Einträge. Dies war durch den bereitzustellenden Speicherplatz für die wiederzuerkennenden Sprachsamples, d.h. durch durch die daraus entstehenden Kosten und den Platzbedarf bedingt. Wurde die Zahl der Einträge weiter erhöht, stieg erfahrungsgemäß der Aufwand für das Training der Spracherkennung erheblich, was zu einer geringeren Benutzerakzeptanz führte.

Gemäß einer bevorzugten Ausführungsform der vorliegenden Erfindung wird der Spracherkennungsalgorithmus vom Benutzer nur auf die Buchstaben des Alphabets und gegebenenfalls Kombinationen und einige wenige Steuerbefehle trainiert. Er wird auf diese Weise vom Benutzer zur Erkennung dieser akustischen Objekte eingerichtet oder entsprechend konfiguriert. Die Abfrage erfolgt durch akustische Eingabe von Anfangs- und (vorzugsweise bis zu zwei) Folgebuchstaben. Fehlerkennungen werden durch Plausibilitätsprüfungen, d.h. z.B. durch Vergleich der Objekte mit Einträgen in einer Speichereinrichtung, vermindert. Die eingegebenen Namen werden nur einmal eingesprochen und in einem Coder mit geringer Bitrate (z.B. half-rate von GSM) gewandelt und unter dem entsprechenden Speicherplatz, gegebenenfalls komprimiert, gespeichert.

Alternativ kann auch ein Syntheseprogramm verwendet werden, das aus einem Namen Sprache synthetisiert, was eventuell weniger Speicherplatz erfordert. In jedem Fall muß die Spracherkennung nicht auf eine Vielzahl von Namen trainiert werden, sondern nur auf einen festen Satz von ca. 30 Buchstabenfolgen und Steuerbefehlen.

Zur Anwendung dieser Ausführungsform der Erfindung aktiviert der Benutzer das Leistungsmerkmal "Sprachwahl" z.B. mit der seitlichen Scrolltaste und gibt die ersten Buchstaben des gesuchten Eintrags nacheinander ein, und zwar gegebenenfalls in der Form "Buchstabe A" etc. Die Erkennungswahrscheinlichkeit ist dabei erfahrungsgemäß erheblich größer als bei einem einzelnen Buchstaben. Jede Eingabe wird akustisch durch Ausgabe des erkannten Objekts quittiert. Wurde das Objekt richtig erkannt, erfolgt die Eingabe des nächsten zu erkennenden Objekts.

Wird ein Objekt fehlerhaft erkannt, antwortet der Benutzer mit "falsch" oder "nein". Das System schlägt daraufhin den nächsten wahrscheinlichen Buchstaben vor, z.B. statt "D" ein "T" oder statt "H" ein "A" und so weiter. In den meisten Fällen genügt es, die ersten zwei oder drei Buchstaben einzugeben, um den richtigen Eintrag zu finden. Wird ein entsprechender Steuerbefehl eingegeben oder erfolgt keine weitere Eingabe (Steuerbefehl = Sprechpause), gibt das Gerät den entsprechenden Namen im Telefonbuch des Gerätes aus. Sind mehrere Einträge mit gleicher Anfangsbuchstabenfolge vorhanden, befiehlt der Benutzer z.B. "weiter", bis der "richtige" Name quittiert wird.

Wird ein Buchstabe falsch erkannt und infolgedessen ein im Alphabet weit entfernter erster Buchstabe - z.B. "T" statt "D" als Kopf der eingegebenen Buchstabenkombination ausgegeben, gibt (d.h. spricht) der Benutzer den Steuerbefehl "Auswahl" ein. Das Gerät schlägt dann die wahrscheinlichste nächste richtige Anfangsbuchstabenkombination vor. Durch Kenntnis der im Telefonbuch gespeicherten Namen können die meisten möglichen Fehlkombinationen von vornherein ausgeschlossen werden. Danach befiehlt der Benutzer "wählen".

## Patentansprüche

1. Datenverarbeitungssystem (DPCD) oder Kommunikationsendgerät (DPCD) mit einer Einrichtung (SRU) zur Erkennung gesprochener Sprache mit folgenden Merkmalen:
a) die Einrichtung zur Spracherkennung ist speziell zur Erkennung bestimmter akustischer Objekte (AO), nämlich von Einzelbuchstaben, Buchstabenkombinationen oder Steuerbefehlen eingerichtet oder kann speziell zur Erkennung solcher Objekte konfiguriert werden;
b) es ist eine Einrichtung zur akustischen Ausgabe (DU) oder optischen Anzeige (DU) erkannter akustischer Objekte (RAO) vorgesehen;
c) bei Falscherkennung eines akustischen Objekts bewirkt die darauffolgende Erkennung
c1) eines ersten Steuerbefehls wie z.B. des Wortes "nochmal", dass der Spracherkennungsalgorithmus die wiederholte Aussprache des falsch erkannten Objekts erwartet;
c2) eines zweiten Steuerbefehls wie z.B. des Wortes "falsch" oder eines dritten Steuerbefehls wie z.B. des Wortes "weiter", dass der Spracherkennungsalgorithmus mindestens ein weiteres akustisches Objekt ausgibt, wobei
d) die Wahrscheinlichkeit oder Plausibilität dieses weiteren Objekts zwar geringer ist, als die des zuvor ausgegeben Objekts, aber größer als diejenige aller anderen in Frage kommenden Objekte, oder wobei
e) dieses weitere Objekt durch die Abfolge von Einträgen in einer Speichereinrichtung (MU) der Vorrichtung gegeben ist.

2. Vorrichtung nach Anspruch 1, bei der die Erkennung eines dritten Steuerbefehls wie z.B. des Wortes "richtig" oder z.B. des Wortes "wählen" oder z.B. des Wortes "verbinden", bewirkt, dass der Spracherkennungsalgorithmus das zuletzt ausgegebene Objekt als richtig erkannt wertet, eine Ausgabe weiterer Objekte gegebenenfalls beendet und/oder eine dem erkannten Steuerbefehl entsprechende Funktion auszulösen.

3. Verfahren zur Erkennung bestimmter akustischer Objekte, bei dem
a) ein Spracherkennungsalgorithmus verwendet wird, der speziell zur Erkennung bestimmter akustischer Objekte, nämlich von Einzelbuchstaben, Buchstabenkombinationen oder Steuerbefehlen eingerichtet ist oder speziell zur Erkennung solcher Objekte konfiguriert werden kann;
b) erkannte akustische Objekte akustisch ausgegeben oder optisch angezeigt werden;
c) bei Falscherkennung eines akustischen Objekts bewirkt die darauffolgende Erkennung
c1) eines ersten Steuerbefehls wie z.B. des Wortes "nochmal", dass der Spracherkennungsalgorithmus die wiederholte Aussprache des falsch erkannten Objekts erwartet;
c2) eines zweiten Steuerbefehls wie z.B. des Wortes "falsch" oder eines dritten Steuerbefehls wie z.B. des Wortes "weiter", dass der Spracherkennungsalgorithmus mindestens ein weiteres akustisches Objekt ausgibt, wobei
d) die Wahrscheinlichkeit oder Plausibilität dieses weiteren Objekts zwar geringer ist, als die des zuvor ausgegeben Objekts, aber größer als diejenige aller anderen in Frage kommenden Objekte, oder wobei
e) dieses weitere Objekt durch die Abfolge von Einträgen in einer Speichereinrichtung (MU) der Vorrichtung gegeben ist.

4. Verfahren nach Anspruch 3, bei dem die Erkennung eines dritten Steuerbefehls wie z.B. des Wortes "richtig" oder z.B. des Wortes "wählen" oder z.B. des Wortes "verbinden", bewirkt, dass der Spracherkennungsalgorithmus das zuletzt ausgegebene Objekt als richtig erkannt wertet, eine Ausgabe weiterer Objekte gegebenenfalls beendet und/oder eine dem erkannten Steuerbefehl entsprechende Funktion auszulösen.

## Claims

1. Data processing system (DPCD) or communications terminal (DPCD) with a device (SRU) for recognizing speech having the following features:
a) the speech recognition device is set up specifically to recognize certain acoustic objects (AO), to be specific individual letters, combinations of letters or control commands, or can be configured specifically to recognize such objects;
b) a device for the acoustic output (DU) or optical display (DU) of recognized acoustic objects (RAO) is provided;
c) if an acoustic object is wrongly recognized, the subsequent recognition
c1) of a first control command, such as for example the word "again", has the effect that the speech recognition algorithm expects repeated utterance of the wrongly recognized object;
c2) of a second control command, such as for example the word "wrong", or of a third control command, such as for example the word "further", has the effect that the speech recognition algorithm outputs at least one further acoustic object, where
d) the probability or plausibility of this further object is in fact less than that of the previously output object, but greater than that of all the other objects coming into consideration, or where
e) this further object is provided by the sequence of entries in a storage device (MU) of the device.

2. Device according to Claim 1, in which the recognition of a third control command, such as for example the word "correct" or for example the word "choose" or for example the word "combine", has the effect that the speech recognition algorithm assesses the last-output object as correctly recognized, ends any output of further objects and/or triggers a function corresponding to the control command recognized.

3. Method for recognizing certain acoustic objects, in which
a) a speech recognition algorithm which is set up specifically to recognize certain acoustic objects, to be specific individual letters, combinations of letters or control commands, or can be configured specifically to recognize such objects, is used;
b) recognized acoustic objects are acoustically output or optically displayed;
c) if an acoustic object is wrongly recognized, the subsequent recognition
c1) of a first control command, such as for example the word "again", has the effect that the speech recognition algorithm expects repeated utterance of the wrongly recognized object;
c2) of a second control command, such as for example the word "wrong", or of a third control command, such as for example the word "further", has the effect that the speech recognition algorithm outputs at least one further acoustic object, where
d) the probability or plausibility of this further object is in fact less than that of the previously output object, but greater than that of all the other objects coming into consideration, or where
e) this further object is provided by the sequence of entries in a storage device (MU) of the device.

4. Method according to Claim 3, in which the recognition of a third control command, such as for example the word "correct" or for example the word "choose" or for example the word "combine", has the effect that the speech recognition algorithm assesses the last-output object as correctly recognized, ends any output of further objects and/or triggers a function corresponding to the control command recognized.

## Revendications

1. Système de traitement de données (DPCD) ou terminal de communication (DPCD) doté d'un dispositif (SRU) destiné à la reconnaissance de la parole et présentant les caractéristiques suivantes:
a) le dispositif destiné à la reconnaissance de la parole est réglé spécialement pour reconnaître des objets acoustiques déterminés (AO), à savoir des lettres isolées, des combinaisons de lettres ou des instructions de commande ou peut être configuré spécialement pour reconnaître de tels objets;
b) il est prévu un dispositif destiné à l'édition acoustique (DU) ou à l'affichage optique (DU) d'objets acoustiques reconnus (RAO);
c) en cas de reconnaissance erronée d'un objet acoustique,
c1) la reconnaissance, qui suit immédiatement, d'une première instruction de commande, comme, par exemple, du mot "répéter", a pour effet que l'algorithme de reconnaissance de la parole attend la répétition de la prononciation de l'objet reconnu d'une façon erronée;
c2) la reconnaissance, qui suit immédiatement, d'une deuxième instruction de commande, comme, par exemple, du mot "faux", ou d'une troisième instruction de commande, comme, par exemple, du mot "continuer", a pour effet que l'algorithme de reconnaissance de la parole édite au moins un autre objet acoustique,
d) la probabilité ou la plausibilité de cet autre objet étant certes plus faible que celle de l'objet édité auparavant, mais supérieure à celle de tous les autres objets qui entrent en ligne de compte ou
e) la probabilité ou la plausibilité de cet autre objet étant donnée par l'ordre de succession d'inscriptions dans un dispositif de mémorisation (MU) du système.

2. Système selon la revendication 1 dans lequel la reconnaissance d'une troisième instruction de commande, telle que, par exemple, du mot "correct" ou, par exemple, du mot "numéroter" ou, par exemple, du mot "établir la liaison" a pour effet que l'algorithme de reconnaissance de la parole considère le dernier objet édité comme reconnu correctement, termine, le cas échéant, l'édition d'autres objets et/ou déclenche une fonction correspondant à l'instruction de commande reconnue.

3. Procédé destiné à la reconnaissance d'objets acoustiques déterminés dans lequel
a) on utilise un algorithme de reconnaissance de la parole réglé spécialement pour reconnaître des objets acoustiques déterminés, à savoir des lettres isolées, des combinaisons de lettres ou des instructions de commande ou qui peut être configuré spécialement pour reconnaître de tels objets;
b) des objets acoustiques reconnus sont édités acoustiquement ou affichés optiquement;
c) en cas de reconnaissance erronée d'un objet acoustique,
c1) la reconnaissance, qui suit immédiatement, d'une première instruction de commande, comme, par exemple, du mot "répéter", a pour effet que l'algorithme de reconnaissance de la parole attend la répétition de la prononciation de l'objet reconnu d'une façon erronée;
c2) la reconnaissance, qui suit immédiatement, d'une deuxième instruction de commande, comme, par exemple, du mot "faux", ou d'une troisième instruction de commande, comme, par exemple, du mot "continuer", a pour effet que l'algorithme de reconnaissance de la parole édite au moins un autre objet acoustique,
d) la probabilité ou la plausibilité de cet autre objet étant certes plus faible que celle de l'objet édité auparavant, mais supérieure à celle de tous les autres objets qui entrent en ligne de compte ou
e) la probabilité ou la plausibilité de cet autre objet étant donnée par l'ordre de succession d'inscriptions dans un dispositif de mémorisation (MU) du système.

4. Procédé selon la revendication 3, dans lequel la reconnaissance d'une troisième instruction de commande, telle que, par exemple, du mot "correct" ou, par exemple, du mot "numéroter" ou, par exemple, du mot "établir la liaison" a pour effet que l'algorithme de reconnaissance de la parole considère le dernier objet édité comme reconnu correctement, termine, le cas échéant, l'édition d'autres objets et/ou déclenche une fonction correspondant à l'instruction de commande reconnue.
